# EUROPÄISCHE PATENTSCHRIFT

(11) **EP 1 037 354 B1**
(45) Veröffentlichungstag und Bekanntmachung des Hinweises auf die Patenterteilung: **02.01.2004**
(21) Anmeldenummer: 00105193.7
(22) Anmeldetag: 11.03.2000
(51) Int. Cl.: H02H 7/08

(54) **Verfahren zum Betreiben eines elektromotorischen Antriebs für einen Aufzug und danach betriebener Aufzug**
Method for operating an electromotoric drive for an elevator and elevator using such a method
Procédé de fonctionnement de l'entraînement électromoteur d'une installation pour un ascenseur et ascenseur utilisant une telle méthode

(30) Priorität: 18.03.1999 DE 19912062
(43) Veröffentlichungstag der Anmeldung: 20.09.2000
(73) Patentinhaber: Ziehl-Abegg AG, 74653 Künzelsau (DE)
(72) Erfinder: Spannagel, Mathias, 74653 Künzelsau-Gaisbach (DE); Eisert, Gerhard, 74676 Niedernhall (DE)
(74) Vertreter: Patent- und Rechtsanwaltssozietät, Maucher, Börjes & Kollegen

(56) Entgegenhaltungen:
- EP-A- 0 767 133

## Beschreibung

Die Erfindung bezieht sich auf ein Verfahren nach dem Oberbegriff des Anspruches 1 sowie einen danach betriebenen Aufzug oder eine.Fahrtreppe nach Oberbegriff von Anspruch 5.

Bei Aufzügen oder Fahrtreppen bestehen hohe Sicherheitsanforderungen. In allen Betriebssituationen muss deshalb sichergestellt sein, dass keine Fehlfunktionen auftreten und im Störungsfall ein unkontrollierter Betrieb ausgeschlossen ist.
Für den Betrieb eines Aufzugs oder dergleichen sind eine Aufzugssteuerung sowie ein Aufzugsantrieb vorgesehen. Die Aufzugssteuerung hat im wesentlichen die nachfolgenden Aufgaben:
- Ermittlung der aktuellen Position des Fahrkorbes im Schacht
- Auswertung der eingehenden Rufe (Kabinen- und Außenrufe)
- Entscheidung welche Position als nächstes angefahren wird
- Sicherheitsfunktionen:
   - Überwachung der Kabinentüren
   - Überwachung der Schachttüren
   - Überwachung der Fahrkorbgeschwindigkeit
   - Überwachung der Schutzräume
   - Überwachung der Endschalter
   - Überwachung der Fahrzeiten

Der Aufzugsantrieb umfasst im wesentlichen zumindest einen Elektromotor, Schaltelemente zum Verbinden mit einem Stromversorgungsnetz sowie zum Umkehren der Laufrichtung und eine Überwachungseinrichtung, um im Störungsfall den Energiefluss zwischen Stromversorgungsnetz und Motor zu unterbrechen.
Aus Sicherheitsgründen werden als Schaltelemente zwei voneinander unabhängige Schütze verwendet. Überwacht werden die Hauptschaltglieder dieser Schütze, wobei bei jedem Zwischenhalt, Richtungswechsel oder Stillsetzen des Aufzuges kontrolliert wird, ob die Hauptschaltglieder beider Schütze geöffnet sind und der Energiefluss unterbrochen ist. Ist dies nicht der Fall, wird durch die Überwachungseinrichtung ein erneutes Anfahren des Aufzuges verhindert. Zur Verhinderung eines ungewollten Anlaufs des Antriebsmotors erfolgt eine allpolige, elektromechanische Trennung des Antriebsmotors von seinem speisenden Netz. Die Trennung wird über Leistungsschütze vorgenommen. Diese elektromechanischen Schalter sind jedoch durch Kontaktabbrand verschleißbehaftet und können beim Kontaktieren auch verschweißen und dann nicht mehr geöffnet werden, weshalb beim Einsatz in Aufzugssteuerungen mit entsprechend höheren Sicherheitsanforderungen mindestens zwei in Reihe geschaltete Hauptschaltglieder eingesetzt werden müssen. Durch die in der Regel große Schalthäufigkeit und Belastung beim Einsatz in Aufzugsanlagen ist es erforderlich, die vergleichsweisen teuren Schütze von Zeit zu Zeit auszutauschen, wodurch entsprechend hohe Betriebskosten entstehen.
Bei Aufzugsanlagen mit einem an einem Wechselstromnetz betriebenen, drehzahlvariablen Aufzugsantrieb weist dieser einen an das Wechselstromnetz angeschlossenen Umrichter auf, der einen Gleichrichter sowie einen über einen Zwischenkreis angeschlossenen Wechselrichter beinhaltet. An den Wechselrichter ist ein Elektromotor angeschlossen.
Aus der EP-A-0 767 133 ist ein solcher drehzahlvariabler Aufzugsantrieb bekannt. Dieser weist eine Einrichtung zur Fehlererkennung auf. Dabei ist einer der beiden aus Sicherheitsgründen bisher verwendeten, voneinander unabhängigen, elektromechanischen Schalter ersetzt, indem im Störungsfall ein den Wechselrichter steuerndes, pulsweitenmoduliertes Steuersignal unterbunden wird. Zum Erkennen eines Störungsfalls wird hinter dem Gleichrichter im Zwischenkreis der Eingangsstrom des Wechselrichters gemessen.
Damit kann zwar einer der elektromechanischen Schalter ersetzt werden, es ist aber immer noch ein zur Sicherheitsabschaltung gehörender, elektromechanischer Schalter erforderlich. Außerdem ist eine eindeutige Fehlerzuordnung problematisch, weil ein gemessener Stromfluss im Zwischenkreis auch durch defekte Halbleiterschalter des Wechselrichters verursacht werden kann.

Aufgabe der vorliegenden Erfindung ist es, ein Verfahren zum Betreiben eines Aufzugs oder dergleichen unter Beibehaltung der hohen Sicherheitsanforderungen sowie einen danach betrieben Aufzug zu schaffen, womit ein praktisch verschleißfreier Betrieb möglich ist und damit einerseits die Betriebskosten gesenkt und andererseits die Betriebssicherheit dadurch noch erheblich erhöht werden kann.

Die Aufgabe wird durch die Merkmale der unabhängigen Ansprüche gelöst.
Die bei bisherigen Aufzügen vorgesehenen Schütze mit ihren mechanischen Kontakten können dadurch entfallen, ohne dass Nachteile bezüglich der Sicherheit eintreten. Durch das verschleißfreie Ein- und Ausschalten des Motors ist vielmehr die Betriebssicherheit und Lebensdauer der Anlage insgesamt wesentlich erhöht und gleichzeitig sind Überwachungsmaßnahmen vorhanden, durch welche die bisherigen Sicherheitsanforderungen hinsichtlich der Betriebsüberwachung weiterhin zumindest erfüllt sind.
Dazu ist eines der in der Regel zwei bislang vorgesehenen Schütze durch die mit einer Ansteuerelektronik verbundenen Halbleiterschalter des Frequenzumrichters ersetzt, zu deren Überwachung die Motorstrommessvorrichtung vorgesehen ist.
Die Funktion des zweiten, sonst vorgesehenen Schützes übernimmt der steuerbare Gleichrichter, dessen Ansteuerung nach jeder Fahrt des Aufzuges abgeschaltet wird.
Es sind somit, vergleichbar mit den beiden elektromechanischen Schaltern bei bisherigen Aufzugssteuerungen, ebenfalls zwei voneinander unabhängige Schalter vorhanden, die aber durch elektronische Schalter oder elektronische Baugruppen gebildet sind.
Vorteilhafte Ausgestaltungen der Erfindung ergeben sich aus den abhängigen Ansprüchen.
Die Maßnahmen des Anspruches 2 bewirken, dass zur zusätzlichen Sicherheit im Störungsfall bei Überschreiten eines vorgebbaren Gleichspannungsschwellwertes außer dem Sperren der Halbleiterschalter des Frequenzumrichters eine Fehlermeldung an eine übergeordnete Steuerung vorgenommen werden kann, welche die Ansteuerversorgungsspannung der Halbleiterschalter unterbricht.
Die vorgesehenen Überwachungseinrichtungen dieser elektronischen Baugruppen genügen zumindest den gleichen Sicherheitsanforderungen wie bisher. Hinzu kommt, dass durch den Einsatz eines Wechsel- oder Frequenzumrichters ein geregelter Betrieb des Antriebsmotors über einen großen Betriebsbereich möglich ist.

Nachstehend ist die Erfindung mit ihren wesentlichen Einzelheiten anhand der Zeichnungen noch näher erläutert.

Es zeigt:
- Fig. 1: ein Blockschaltbild einer Aufzugselektrik mit einer Aufzugssteuerung, einem Umrichter, einem Versorgungsnetz sowie einem Elektromotor und
- Fig. 2: einSchaltungsausschnittzweierzueinemFrequenzumrichter gehörender Halbbrücken.

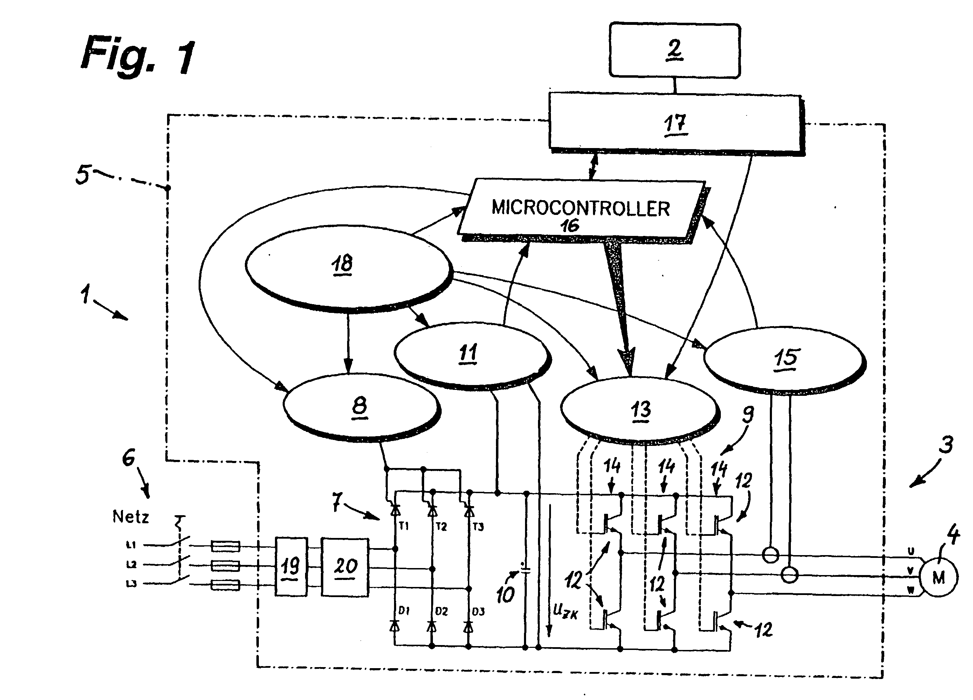

Zu einer Aufzugselektrik 1 (Fig. 1) gehört neben einer Aufzugssteuerung 2 ein im ganzen mit 3 bezeichneter Antrieb, der im vorliegenden Fall einen Elektromotor 4 sowie einen Umrichter 5 umfasst. Der Umrichter 5 ist dabei die Baugruppe, die zwischen den Elektromotor 4 und einem Wechselstrom-Versorgungsnetz 6 geschaltet ist. Im Ausführungsbeispiel handelt es sich um ein dreiphasiges Wechselstrom-Versorgungsnetz und um einen dreiphasigen Elektromotor.

Der Umrichter 5 dient dazu, den Elektromotor 4 ans Netz zu schalten oder von diesem zu trennen sowie zur Drehrichtungsumkehr. Der Umrichter 5 beinhaltet zwei innerhalb der Leistungsübertragung zwischen dem Netz 6 und dem Elektromotor 4 seriell geschaltete Baugruppen, die unabhängig voneinander auf ihre Funktion hin überwacht werden und mittels denen jeweils für sich ein Sicherheitsabschalten des Energieflusses zum Motor 4 im Störungsfall möglich ist.

Eine dieser beiden Baugruppen ist ein steuerbarer Gleichrichter 7 mit zugehöriger Ansteuerelektronik 8 und die andere Baugruppe ist im wesentlichen durch einen Frequenzumrichter 9 mit steuerbaren Halbleiterschaltern 12 sowie einer Ansteuerelektronik 13 gebildet.

Der steuerbare Gleichrichter 7 ist im Ausführungsbeispiel eine halbgesteuerte Brückenschaltung, die bei der hier vorgesehenen Drehstromversorgung drei Dioden D1 bis D3 sowie drei Thyristoren T1 bis T3 umfasst. Sind die Thyristoren T1 bis T3 von der Ansteuerelektronik 8 angesteuert, so liefert der Gleichrichter 7 eine Ausgangsgleichspannung, die als Zwischenkreisspannung U_{ZK} dem Frequenzrichter 9 zugeführt wird. Durch einen Kondensator 10 ist die Zwischenkreis-Gleichspannung gepuffert.

Werden die Thyristoren T1 bis T3 gesperrt, indem sie nicht mehr von der Ansteuerelektronik 8 angesteuert werden, was bei jedem Stop des Aufzugs beziehungsweise des Antriebsmotors 4 der Fall ist, so sinkt die auch am Kondensator 10 anstehende Zwischenkreisspannung entsprechend dessen Entladung ab. Eine Meßeinrichtung 11 ist zur Messung dieser Zwischenkreisspannung vorgesehen.

Die Zwischenkreisspannung dient als Eingangs-Gleichspannung für den Frequenzumrichter 9. Dieser weist steuerbare Halbleiterschalter 12 sowie eine Ansteuerelektronik 13 für diese Halbleiterschalter auf. Es sind drei Gruppen von jeweils eine Halbbrücke 14 bildenden Halbleiterschaltern 12 vorgesehen, wobei jede Halbbrücke 14 durch zwei mit ihren Kollektor-Emitterstrecken in Reihe geschalteten Halbleiterschaltern 12 zusammensetzt ist. Im vorliegenden Ausführungsbeispiel sind die Halbleiterschalter durch IGBTs gebildet. Die Halbbrücken 14 sind jeweils an dem Plus- und dem Minus-Pol der Zwischenkreisspannung angeschlossen und an dem jeweiligen Verbindungsknoten zwischen Emitter und Kollektor ist der Motor 4 mit seinen Strängen UVW angeschlossen. Durch diese Brückenschaltung kann der Motor 4 in bekannter Weise in seiner Laufrichtung umgesteuert werden. Mit Hilfe der Ansteuerelektronik 13 kann die Ansteuerfrequenz der Halbleiterschalter 12 variiert werden, so daß der Motor auch mit unterschiedlichen Drehzahlen zwischen Null und maximaler Drehzahl betrieben werden kann.

Zur Überwachung des Frequenzumrichters 9 ist eine Strommeßvorrichtung 15 vorgesehen, mittels der die Motorströme in den Phasensträngen gemessen werden kann. Die Meßeinrichtung 11 zur Messung der Zwischenkreisspannung hinter dem steuerbaren Gleichrichter 7 und die Strommeßvorrichtung 15 zur Messung der Motorströme sind an einen Microcontroller 16 als Teil einer Überwachungseinrichung angeschlossen. Der Microcontroller 16 ist mit einer Schnittstelle 17 verbunden, an die die Aufzugssteuerung 2 angeschlossen ist.

Mit 18 ist noch ein Netzteil, vorzugsweise ein Schaltnetzteil zur Erzeugung der intern innerhalb des Umrichters 5 benötigten Spannungen bezeichnet, wobei dieses Netzteil aus der Zwischenkreisspannung versorgt wird. Außerdem sind noch zwei Baugruppen in die Zuleitung der Wechselspannung zu dem Gleichrichter 7 vorgesehen und zwar eine Baugruppe 19 mit Netzdrosseln und eine Baugruppe 20 mit einem Funkentstörfilter.

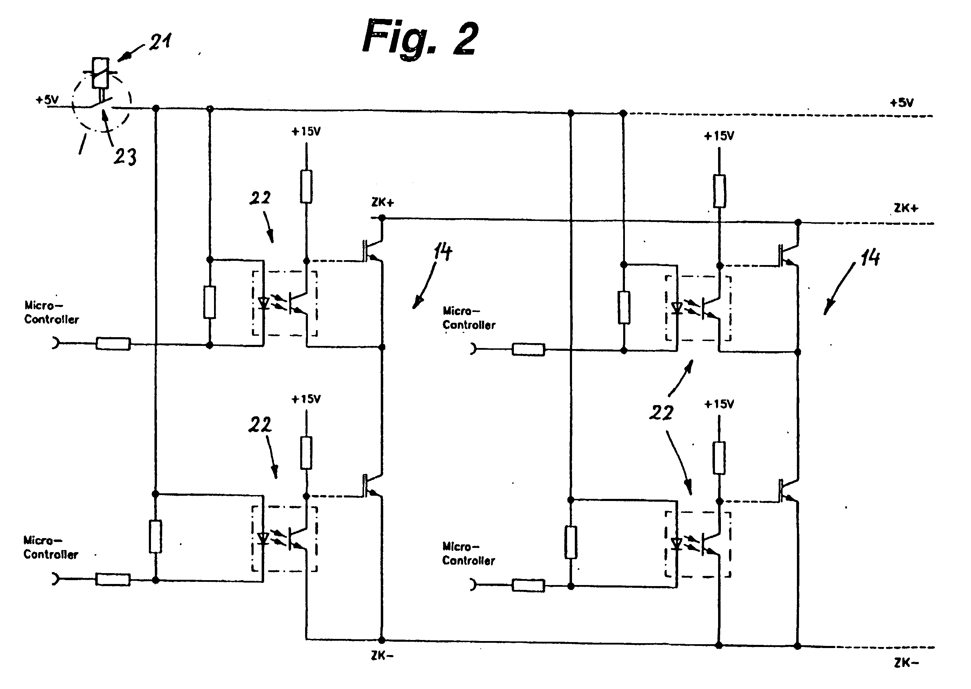

Nach jeder Fahrt des Aufzuges wird der Elektromotor 4 zum Stillstand gebracht, wobei dies durch den ihn steuernden Frequenzumrichter 9 erfolgt. In der Stillstandsphase erfolgt dann eine Überwachung der beiden Baugruppen - einerseits des steuerbaren Gleichrichters 7 und andererseits des Frequenzumrichters 9. In der Stopp-Phase des Aufgzugs wird dazu die Ansteuerung des Gleichrichters 7 abgeschaltet. Dadurch sinkt die Zwischenkreisspannung U_{ZK} entsprechend der Entladekurve am Kondensator 10 ab. Dieser Spannungsverlauf wird durch die Meßeinrichtung 11 überwacht. Sollte die Zwischenkreisspannung bei abgeschaltetem Gleichrichter 7 nicht in dem vorgesehenen Maße absinken, so wird ein erneutes Anfahren des Aufzuges durch den Frequenzumrichter selbst verhindert, indem die Halbleiterschalter 12 nicht angesteuert werden. Gleichzeitig wird der Fehler an die übergeordnete Aufzugssteuerung 2 gemeldet. Die übergeordnete Steuerung 2 ist mit einem Sicherheitsrelais 21 (vgl. Fig. 2) verbunden, mit dem die Spannungsversorgung der Ansteuerelektronik 13 für die Halbleiterschalter 12 abschaltbar ist.
Im Fehlerfall wird somit nicht nur über die Ansteuerung des Frequenzumrichters ein Durchschalten der Halbleiterschalter 12 verhindert, sondern es wird zur zusätzlichen Sicherheit auch die zur Ansteuerung notwendige Spannungsversorgung komplett abgeschaltet. Damit ist auch bei einer ungewollten Ansteuerung der Halbleiterschalter 12 sicher ein Anlaufen des Elektromotors 4 im Fehlerfall verhindert.

In Fig. 2 ist die Ansteuerung von zwei der drei in Fig. 1 gezeigten Halbbrücken 14 dargestellt. Gut zu erkennen ist dabei, daß die Ansteuerung der Halbleiterschalter über Optokoppler 22 erfolgt, die ansteuerseitig mit einer gemeinsamen Versorgungsspannung, im vorliegenden Fall 5 Volt sowie mit dem Microcontroller 16 des Umrichters 5 verbunden sind. In der Zuleitung der 5 Volt-Spannungsversorgung für die Ansteuerelektronik ist der Kontakt 23 des Sicherheitsrelais 21 geschaltet. Durch Öffnen dieses Kontaktes 23 wird die komplette Spannungsversorgung der Ansteuerelektronik für alle sechs Frequenzumrichter-Halbleiterschalter 12 gleichzeitig abgeschaltet. Über einen hier nicht dargestellten, zwangsgeführten Kontakt wird der Schaltzustand des Sicherheitsrelais 21 an die übergeordnete Steuerung 2 gemeldet. Über einen weiteren, ebenfalls zwangsgeführten Kontakt kann auch der Microcontroller 16 des Umrichters 5 das Schalten des Sicherheitsrelais überwachen und bei Fehlfunktion ein erneutes Anfahren verhindern. Die Funktion des Schaltgliedes wird nach jeder Fahrt überprüft und überwacht.

Die Strommeßvorrichtung 15 ist mit Stromsensoren zur Überwachung des Motorstroms verbunden. Tritt während des Stillstandes des Antriebs im Fehlerfall ein Stromfluß auf, so wird bewirkt, daß der steuerbare Gleichrichter 7 abgeschaltet wird. Die Strommeßvorrichtung 15 ist dazu mit dem Microcontroller 16 verbunden und dieser mit der Ansteuerelektronik 8 für die Thyristoren T1 bis T3 des Brückengleichrichters 7. Über einen potentialfreien Kontakt wird die übergeordnete Aufzugssteuerung 2 über die Fehlfunktion unterrichtet. Über die übergeordnete Steuerung kann dann wiederum das Sicherheitsrelais 21 angesteuert werden und die Spannungsversorgung der Ansteuerelektronik des Frequenzumrichters 9 unterbrochen werden.

Die Strommeßvorrichtung 15 ist für den geregelten Betrieb des Elektromotors 4 erforderlich und wird zusätzlich für die Überwachung, wie vorbeschrieben, mitbenutzt.

Insgesamt ist durch die erfindungsgemäße Aufzugselektrik durch Einsatz elektronischer Schaltelemente in Verbindung mit Überwachungseinrichtungen zur Kontrolle von deren Funktion die Betriebssicherheit der Anlage wesentlich erhöht und es lassen sich damit wesentlich längere, wartungsfreie Betriebszyklen ohne Sicherheitseinbußen realisieren. Durch die praktisch verschleißfreien Baugruppen erübrigen sich kostenintensive Wartungsarbeiten mit Austausch von Baugruppen, wie dies bisher in vergleichsweise kurzen Zeitabständen erforderlich war.

Dies wird, kurz zusammengefaßt, erreicht, indem innerhalb der Energieübertragung zwischen speisendem Netz 6 und Elektromotor 4 zwei seriell geschaltete Baugruppen vorgesehen sind, die jeweils unabhängig voneinander ein- und ausschaltbar sind und deren Funktion jeweils überwacht wird. Die erste Schaltbaugruppe ist durch den steuerbaren Gleichrichter 7 und die zweite Schaltbaugruppe durch den Frequenzumrichter 9 beziehungsweise dessen Halbleiterschalter 12 gebildet.

Die Funktionsüberwachung des steuerbaren Gleichrichters 7 erfolgt durch Messung der Zwischenkreisspannung U_{ZK} und die Überwachung des Frequenzumrichters 9 durch Messung der Motorströme.

Tritt ein Fehler beim steuerbaren Gleichrichter 7 auf, so kann ein ungewolltes Anlaufen des Elektromotors 4 verhindert werden, indem zum einen der Motor durch den Frequenzumrichter 9 nicht angesteuert wird und indem zum anderen die übergeordnete Steuerung die Ansteuerspannung der Halbleiterschalter des Frequenzumrichters abschaltet.

Tritt ein Fehler im Frequenzumrichter 9 auf, wird dies bei Stillstand des Motors 4 durch Messen des oder der Motorströme registriert und der steuerbare Gleichrichter 7 bleibt dann für die nächste, vorgesehene Anlaufphase gesperrt, so daß der Frequenzumrichter von seiner Energiezufuhr getrennt bleibt. Erwähnt sei in diesem Zusammenhang, daß bei abgeschaltetem, steuerbarem Gleichrichter 7 noch eine vom Kondensator 10 gepufferte, abgesenkte Zwischenkreisspannung U_{ZK} am Frequenzumrichter 9 ansteht, so daß im Fehlerfall diese Spannung einen reduzierten Motor-Stromfluß bei Fehlern innerhalb des Frequenzumrichters 9 bewirken kann. Diese Ströme reichen zwar nicht zum Anlaufen des Motors 4, jedoch kann ein Fehler über diese Strommessung registriert und das Einschalten des steuerbaren Gleichrichters 7 verhindert werden.

## Patentansprüche

1. Verfahren zum Betreiben eines elektromotorischen Antriebs für einen Aufzug, eine Fahrtreppe oder dergleichen, wobei der Antrieb einen Elektromotor (4) aufweist, der über einen Umrichter (5) aus einem Wechselstromnetz (6) betrieben wird, wobei die Wechselspannung mit einem Gleichrichter gleichgerichtet und diese Zwischenkreis-Gleichspannung dem Elektromotor (4) über einen Frequenzumrichter (9) mit steuerbaren Halbleiterschaltern (12) zugeführt wird und wobei eine Überwachung des Betriebszustands vorgenommen wird und bei einem Fehler die Stromversorgung des elektromotorischen Antriebs wenigstens zweifach unterbrochen wird, wobei der Motorstrom gemessen wird und am Ende jedes Fahrabschnittes bei stehendem Motor überprüft wird, ob ein Motorstrom fließt und dass in diesem Betriebszustand im Fall eines Motorstromflusses das erneute Einschalten der Gleichspannung gesperrt und die Ansteuerung der Halbleiterschalter (12) des Frequenzumrichters (9) unterbrochen wird **dadurch gekennzeichnet, dass** die Wechselspannung mit einem steuerbaren Gleichrichter (7) gleichgerichtet wird und die Gleichspannung mit dem steuerbaren Gleichrichter (7) ein- und ausschaltbar ist.

2. Verfahren nach Anspruch 1, **dadurch gekennzeichnet, dass** die Gleichspannung als kondensatorgepufferte Zwischenkreisspannung (U_{ZK}) dem Elektromotor (4) über den Frequenzumrichter (9) zugeführt wird, dass die Zwischenkreisspannung (U_{ZK}) bei abgeschalteter Gleichspannung überwacht und im Störungsfall bei Überschreiten eines vorgebbaren, gegenüber dem Fahrbetriebszustand abgesenkten Gleichspannungsschwellwertes der Zwischenkreisspannung (U_{ZK}) die Ansteuerung der Halbleiterschalter (12) des Frequenzumrichters (9) unterbrochen wird.

3. Verfahren nach Anspruch 1 oder 2, **dadurch gekennzeichnet, dass** die Zwischenkreisspannung (U_{ZK}) vorzugsweise von einem Microcontroller (16) des Umrichters (5) überwacht und im Störungsfall bei Überschreiten eines vorgebbaren Gleichspannungsschwellwertes die Halbleiterschalter (12) des Frequenzumrichters (9) gesperrt werden und eine Fehlermeldung an eine übergeordnete Steuerung (2) vorgenommen wird, welche die Ansteuerversorgungsspannung der Halbleiterschalter (12) unterbricht.

4. Verfahren nach einem der Ansprüche 1 bis 3, **dadurch gekennzeichnet, dass** die Motorströme von einem Microcontroller (16) des Umrichters (5) überwacht und im Störungsfall bei Stromfluss während einer Stillstandsphase das Einschalten der Gleichspannung gesperrt und eine Fehlermeldung an die übergeordnete Steuerung (2) geleitet wird.

5. Aufzug oder Fahrtreppe mit einer Aufzugselektrik, die eine übergeordnete Steuerung und einen Antrieb umfasst, wobei der Antrieb wenigstens einen Elektromotor (4) beinhaltet, der über Schaltelemente mit einem Wechselstrom-Versorgungsnetz (6) verbindbar ist, wobei zwischen dem Wechselstrom-Versorgungsnetz (6) und dem Elektromotor (4) ein Umrichter (5) zwischengeschaltet ist, der einen an das Wechselstrom-Versorgungsnetz (6) angeschlossenen Gleichrichter (7) und einen Frequenzumrichter (9) mit steuerbaren Halbleiterschaltern (12) aufweist, und wobei eine mit der Steuerung verbundene Überwachungseinrichtung zur Unterbrechung des Energieflusses im Störungsfall vorgesehen ist, wobei eine Strommessvorrichtung (15) zur Messung des Motorstroms sowie ein Microcontroller (16) als Teil der Überwachungseinrichtung vorgesehen sind **dadurch gekennzeichnet, dass** als Gleichrichter ein steuerbarer und mittels einer Ansteuerelektronik (8) ein- und ausschaltbarer Gleichrichter (7) vorgesehen ist.

6. Aufzug nach Anspruch 5, **dadurch gekennzeichnet, dass** eine Messeinrichtung (11) zur Überwachung der vom steuerbaren Gleichrichter (7) gelieferten, kondensatorgepufferten Gleichspannung vorgesehen ist.

7. Aufzug nach Anspruch 5 oder 6, **dadurch gekennzeichnet, dass** der Microcontroller (16) vorzugsweise über eine Schnittstelle (17) mit der übergeordneten Steuerung (2) verbunden ist.

8. Aufzug nach einem der Ansprüche 5 bis 7, **dadurch gekennzeichnet, dass** der steuerbaren Gleichrichter (7) durch eine halbgesteuerte Brückenschaltung gebildet ist, die bei Drehstromversorgung insbesondere drei Dioden (D1-D3) und drei Thyristoren (T1-T3) umfasst.

9. Aufzug nach einem der Ansprüche 5 bis 8, **dadurch gekennzeichnet, dass** die steuerbaren Halbleiterschalter (12) des Frequenzumrichters (9) durch vorzugsweise drei Halbbrücken (14) bei Einsatz eines dreiphasigen Motors gebildet ist und dass als Halbleiterschalter (12) insbesondere IGBTs (Isolatet Gate Bipolar Transistors) vorgesehen sind.

10. Aufzug nach einem der Ansprüche 5 bis 9, **dadurch gekennzeichnet, dass** zur Ansteuerung der Halbleiterschalter (12) des Frequenzumrichters (9) Optokoppler (22) vorgesehen sind, die ansteuerseitig mit einer gemeinsamen Versorgungsspannung sowie mit dem Microcontroller (16) des Umrichters (5) verbunden sind und dass in die Zuleitung dieser Versorgungsspannung ein zu einem von der übergeordneten Steuerung (2) ansteuerbares Sicherheitsrelais (21) gehörender Kontakt (23) eingesetzt ist.

11. Aufzug nach Anspruch 10, **dadurch gekennzeichnet, dass** das Sicherheitsrelais (21) einen potentialfreien Kontakt zur Rückmeldung seiner Funktion an die übergeordnete Steuerung (2) und vorzugsweise einen weiteren potentialfreien Kontakt zur Rückmeldung seiner Funktion an den Microprozessor (16) aufweist.

## Claims

1. Process for operating an electromotive drive for a lift, escalator or the like, the drive comprising an electric motor (4) which is operated via a converter (5) from a mains a.c. current supply (6), the a.c. voltage being rectified by a rectifier and this intermediate circuit d.c. voltage being supplied to the electric motor (4) via a frequency converter (9) with controllable semiconductor switches (12) and the operational state being monitored and in the event of a fault the current supply to the electromotive drive being interrupted in at least two ways, wherein the motor current is measured and at the end of each travel section it is checked with the motor stationary to establish whether a motor current is flowing, and in this operational state, if there is current flowing to the motor, the switching back on of the d.c. voltage is prevented and the actuation of the semiconductor switches (12) of the frequency converter (9) is stopped, **characterised in that** the a.c. voltage is rectified by a controllable rectifier (7) and the d.c. voltage can be switched on and off by the controllable rectifier (7).

2. Process according to claim 1, **characterised in that** the d.c. voltage is supplied to the electric motor (4) via the frequency converter (9) as a capacitor-buffered intermediate circuit voltage (U_{ZK}), **in that** the intermediate circuit voltage (U_{ZK}) is monitored with the d.c. voltage switched off and in the event of a fault, if a predetermined d.c. voltage threshold value of the intermediate circuit voltage (U_{ZK}) which is lower than the operational travel state is exceeded, the actuation of the semiconductor switches (12) of the frequency converter (9) is stopped.

3. Process according to claim 1 or 2, **characterised in that** the intermediate circuit voltage (U_{ZK}) is preferably monitored by a microcontroller (16) of the converter (5) and in the event of a fault, if a predetermined d.c. voltage threshold value is exceeded, the semiconductor switches (12) of the frequency converter (9) are blocked and an error message is sent to an overriding control (2) which interrupts the actuating supply voltage to the semiconductor switches (12).

4. Process according to one of claims 1 to 3, **characterised in that** the motor currents are monitored by a microcontroller (16) of the converter (5) and in the event of a fault, if there is current flowing during a stationary phase, the switching on of the d.c. voltage is prevented and an error message is sent to the overriding control (2) .

5. List or escalator with electric elevator means which comprise an overriding control and a drive, the drive comprising at least one electric motor (4) which can be connected to a mains a.c. current supply (6) via switching elements, a converter (5) being connected between the mains a.c. current supply (6) and the electric motor (4), said converter (5) comprising a rectifier (7) connected to the mains a.c. current supply (6) and a frequency converter (9) with controllable semiconductor switches (12), and wherein a monitoring device connected to the control means is provided, for interrupting the flow of energy in the event of a fault, while a current measuring device (15) is provided for measuring the motor current and a microcontroller (16) is provided as part of the monitoring device, **characterised in that** the rectifier provided is a controllable rectifier (7) adapted to be switched on and off by electronic actuating means (8).

6. Lift according to claim 5, **characterised in that** a measuring device (11) is provided for monitoring the capacitor-buffered d.c. voltage supplied by the controllable rectifier (7).

7. Lift according to claim 5 or 6, **characterised in that** the microcontroller (16) is preferably connected to the overriding control (2) via an interface (17).

8. Lift according to one of claims 5 to 7, **characterised in that** the controllable rectifier (7) is formed by a semi-controlled bridging circuit which comprises three diodes (D1-D3) and three thyristors (T1-T3) in particular in the event of a three-phase current supply.

9. Lift according to one of claims 5 to 8, **characterised in that** the controllable semiconductor switches (12) of the frequency converter (9) are formed by preferably three half-bridges (14) if a three-phase motor is used and **in that** IGBTs (Isolated Gate Bipolar Transistors), in particular, are provided as the semiconductor switches (12).

10. Lift according to one of claims 5 to 9, **characterised in that** optocouplers (22) are provided for actuating the semiconductor switches (12) of the frequency converter (9), these optocouplers (22) being connected at the actuation end to a common supply voltage and to the microcontroller (16) of the converter (5) and **in that** a contact belonging to a safety relay (21) which can be actuated by the overriding control (2) is inserted in the feed line for this supply voltage.

11. Lift according to claim 10, **characterised in that** the safety relay (21) comprises a potential-free contact for signalling its function back to the overriding control (2) and preferably has another potential-free contact for signalling its function back to the microprocessor (16).

## Revendications

1. Procédé de fonctionnement d'un entraînement électromoteur pour un ascenseur, un escalier mécanique ou analogue, dans lequel l'entraînement présente un moteur électrique (4) actionné par l'intermédiaire d'un variateur de vitesse (5) à partir d'un réseau à courant alternatif (6), dans lequel la tension alternative est redressée par un redresseur et cette tension continue de circuit intermédiaire est fournie au moteur électrique (4) par l'intermédiaire d'un convertisseur de fréquence (9) à commutateurs à semi-conducteurs commandés (12), dans lequel on effectue une surveillance de l'état de fonctionnement et, en cas de défaut, on coupe au moins doublement l'alimentation électrique de l'entraînement électromoteur, dans lequel on mesure le courant du moteur et, à la fin de chaque parcours, on contrôle, moteur à l'arrêt, s'il circule un courant de moteur et dans cet état de fonctionnement, en cas de circulation de courant de moteur, on bloque la remise en circuit de la tension continue et on interrompt la commande des commutateurs à semi-conducteurs (12) du convertisseur de fréquence (9), **caractérisé par le fait que** la tension alternative est redressée par un redresseur commandé (7) et que la tension continue peut être établie et coupée au moyen du redresseur commandé (7).

2. Procédé selon la revendication 1, **caractérisé par le fait que** la tension alternative est fournie au moteur électrique (4) par l'intermédiaire du convertisseur de fréquence (9) sous forme de tension de circuit intermédiaire (U_{ZK}) tamponnée par condensateur, que la tension de circuit intermédiaire (U_{ZK}) est surveillée quand la tension continue est coupée et que, dans le cas anormal de dépassement d'une valeur seuil prédéfinie de la tension de circuit intermédiaire (U_{ZK}), diminuée par rapport à l' état de marche, la commande des commutateurs à semi-conducteurs (12) du convertisseur de fréquence (9) est interrompue.

3. Procédé selon la revendication 1 ou 2, **caractérisé par le fait que** la tension de circuit intermédiaire (U_{ZK}) est de préférence surveillée par un microcontrôleur (16) du variateur de vitesse (5) et que, dans le cas anormal de dépassement d'une valeur seuil de tension prédéfinie, les commutateurs à semi-conducteurs (12) du convertisseur de fréquence (9) sont bloqués et un message d'erreur est envoyé à une commande maître (2) qui interrompt la tension de commande des commutateurs à semi-conducteurs (12).

4. Procédé selon l'une des revendications 1 à 3, **caractérisé par le fait que** les courants de moteur sont surveillés par un microcontrôleur (16) du variateur de vitesse (5) et que, dans le cas anormal de circulation de courant pendant une phase d'arrêt, l'établissement de la tension continue est bloqué et un message d'erreur est envoyé à la commande maître (2).

5. Ascenseur ou escalier mécanique comportant un circuit électrique d'ascenseur qui comprend une commande maître et un entraînement, dans lequel l'entraînement contient au moins un moteur électrique (4) qui peut être connecté à un réseau d' alimentation en courant alternatif (6) par l'intermédiaire d'éléments de commutation, dans lequel est intercalé entre le réseau d'alimentation en courant alternatif (6) et le moteur électrique (4) un variateur de vitesse (5) qui présente un redresseur (7) connecté au réseau d'alimentation en courant alternatif (6) et un convertisseur de fréquence (9) avec commutateurs à semi-conducteurs commandés (12), dans lequel il est prévu un dispositif de surveillance relié à la commande pour interrompre le flux d'énergie en cas de défaut, et dans lequel il est prévu un dispositif de mesure de courant (15) pour la mesure du courant de moteur ainsi qu'un microcontrôleur (16) faisant partie du dispositif de surveillance, **caractérisé par le fait qu'**il est prévu comme redresseur un redresseur (7) commandé et pouvant être mis en fonction et hors fonction au moyen d'une électronique de commande (8).

6. Ascenseur selon la revendication 5, **caractérisé par le fait qu'**il est prévu un dispositif de mesure (11) pour la surveillance de la tension continue tamponnée par condensateur fournie par le redresseur commandé (7).

7. Ascenseur selon la revendication 5 ou 6, **caractérisé par le fait que** le microcontrôleur (16) est de préférence relié à la commande maître (2) par l'intermédiaire d'une interface (17).

8. Ascenseur selon l'une des revendications 5 à 7, **caractérisé par le fait que** le redresseur commandé (7) est formé par un circuit en pont semi-commandé qui, en cas d'alimentation électrique triphasée, comprend en particulier trois diodes (D1 - D3) et trois thyristors (T1 - T3).

9. Ascenseur selon l'une des revendications 5 à 8, **caractérisé par le fait que** les commutateurs à semi-conducteurs commandés (12) du convertisseur de fréquence (9) sont formés de préférence par trois demi-ponts (14) en cas d'utilisation d'un moteur triphasé et qu'il est prévu en particulier des IGBT (Isolated Gate Bipolar Transistors, transistors bipolaires à porte isolée) comme commutateurs à semi-conducteurs (12).

10. Ascenseur selon l'une des revendications 5 à 9, **caractérisé par le fait qu'**il est prévu pour la commande des commutateurs à semi-conducteurs (12) du convertisseur de fréquence (9) des optocoupleurs (22) qui sont reliés côté commande à une tension d'alimentation commune ainsi qu'au microcontrôleur (16) du variateur de vitesse (5) et qu'un contact (23) d'un relais de sécurité (21) commandé par la commande maître (2) est placé dans la ligne d'arrivée de cette tension d'alimentation.

11. Ascenseur selon la revendication 10, **caractérisé par le fait que** le relais de sécurité (21 ) présente un contact sans potentiel pour le contrôle en retour de son fonctionnement à la commande maître (2) et de préférence un autre contact sans potentiel pour le contrôle en retour de son fonctionnement au microprocesseur (16).
